Europäisches Patentamt

European Patent Office

Office européen des brevets

(11) Publication number: **0 074 461**

**A1**

(12) # EUROPEAN PATENT APPLICATION

(21) Application number: 82103901.3

(22) Date of filing: 05.05.82

(51) Int. Cl.³: **B 01 D 45/12**
C 10 J 3/84, C 10 K 1/02
B 04 C 3/02

(30) Priority: 10.09.81 US 300844

(43) Date of publication of application:
23.03.83 Bulletin 83/12

(84) Designated Contracting States:
BE DE FR GB IT

(71) Applicant: WESTINGHOUSE ELECTRIC CORPORATION
Westinghouse Building Gateway Center
Pittsburgh Pennsylvania 15222(US)

(72) Inventor: Arthurs, Michael James
313 Pine Drive
New Stanton Pennsylvania(US)

(72) Inventor: Schenone, Carl Edward
Box 88
Madison Pennsylvania(US)

(72) Inventor: Tendulkar, Suresh Chandra Purushottam
1643 Orange Tree Lane
La Canada California(US)

(74) Representative: Fleuchaus, Leo, Dipl.-Ing. et al,
Fleuchaus & Wehser Melchiorstrasse 42
D-8000 München 71(DE)

(54) Cold wall separator.

(57) Apparatus and method for cleansing a combustible product gas such as is discharged from a coal gasification reactor. The high temperature gas, as discharged, has mixed therein matter which is tacky and above its liquidus temperature. The mixture is directed to impinge upon a smooth metallic interior surface (64) of a centrifugal separator (32) which surface (64) is maintained at a temperature below the liquidus temperature of the matter to be cleansed from the mixture.

FIG. 4

COLD WALL SEPARATOR

This invention relates to method and apparatus for cleansing a hot gaseous stream containing molten matter, and more particularly to cleansing of combustion gas streams containing liquidus particles discharged from coal gasification systems.

Process systems for gasifying solid carbonaceous materials, such as coal, typically discharge a contaminated combustible product gas at high temperatures, in the range of 760°C to 982°C, and higher. The product gas is contaminated by small globules or fragments of materials in a form which is sticky or tacky at the high temperature. In other terms, the globules, or at least some of the constituents, are above their liquidus temperature. Typical of such constituents are $Fe_{1-x}S$, low melting compounds of Fe, Na, Al, K, and $SiO_x$, and particularly the various mediums which result from the sulfur, iron and silicon content of coals and similar materials. In order to provide an efficient gasification process, the discharged gas and globule mixture must be cleansed of non-vaporous matter and typically is passed through heat exchangers for useful recovery of heat energy. Operating experience has shown, however, that cleansing of the gas is difficult and can result in deposition within refractory or metal and other component parts downstream of the gasifier which will require batch cleaning of the components and, ultimately, can clog the components and stop the process.

Various types of cyclones are most often used downstream of the gasification unit, and are prone to the clogging mechanism.

A centrifugal cyclone unit at the Process Development Unit (PDU) being operated for the United States Government at Madison, Pennsylvania, experienced clogging on the refractory liner of the cyclone which eventually totally blocked continued entrance of a raw combustion gas. Subsequent testing found continued plugging upon redesign to alleviate eddy currents or stagnation zones. Severe deposition was also experienced as a result of buildup upon smooth metallic and ceramic liners of the cyclone.

It is therefore the principal object of the present invention to provide means for cleansing the raw high temperature combustion gas discharged from a coal gasification process which alleviates the deposition and buildup of matter upon the component parts.

With this object in view, the present invention resides in an improved centrifugal separator adapted for cleansing a mixture of combustible gas and other matter discharged from a carbonaceous material gasifier at a temperature above its liquidus temperature, wherein said separator's internal surface area, which is positioned such that said mixture impacts thereon, is provided with cooling means for maintaining said surface area at a temperature below the liquidus temperature of said matter.

The gas and globule matter mixture discharged from a gasifier at a high temperature, typically in the range of 955°C, is directed to impinge upon the cold metal surface. The surface, for example, can be the entire internal surface of a centrifugal separator, including the tubular inlet, or can be selected portions of the separator near the inlet. As the mixture impinges upon the cold surface, maintained at a temperature which is less than the "sticking" temperature of the impinging particles, and preferably at about 200°C for a coal gasification system, the undesirable matter rapidly cools and contracts, and solidifies. The high stress in the formed particulate matter during shrinkage, combined with the velocity of the flowing mixture, causes the particle to fall or be sheared from the wall and carried as solid particulates in a gas through the balance of the separator where the centrifugal separation function occurs, typically aided by gravity.

The invention will become more readily apparent from the following description of a preferred embodiment thereof shown, by way of example only, in the accompanying drawing, in which:

Figure 1 is a simplified schematic of a carbonaceous solids gasification system in accordance with the invention;

Figure 2 is a plan view, in section, of a prior art cyclone showing internal deposition resulting from operation;

Figure 3 is a development view of the interior of the cyclone of Figure 2;

Figure 4 is a plan view, in section, of a cyclone and gasifier in accordance with the invention, showing internal deposition;

Figure 5 is a plan view, in section, of a portion of the invention;

Figure 6 is a plan view, in section, of another embodiment of the invention;

Figure 7 is a plan view, in section, of yet another embodiment in accordance with the invention; and

Figure 8 is an elevation view, in section, of another embodiment in accordance with the invention.

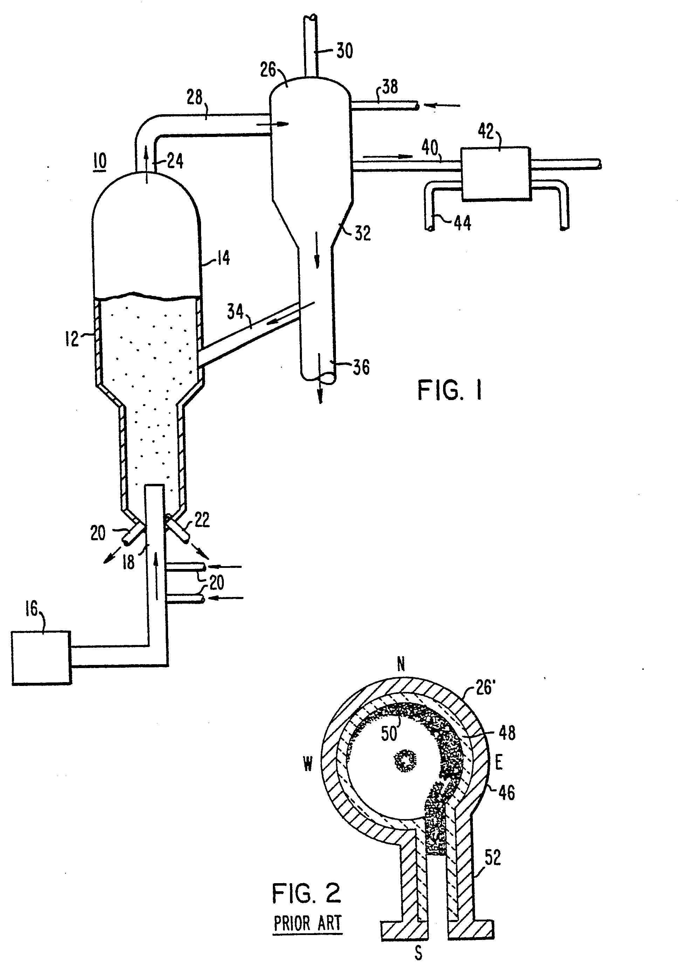

Referring now to Figure 1 there is shown a portion of a system, generally referenced by numeral 10, for production of a combustible product gas from carbonaceous solids. A gasifier 12, such as a fluidized bed type, is formed of a vessel 14 into which carbonaceous materials, such as coal, char, lignite, peat and wood, among others, are fed from a hopper 16. In the exemplary

4

system, particulated coal is fed upwardly through an inlet 18 into the vessel 14. Also fed into the vessel through conduits 20 are fluidizing and combustion support gases. Ash is withdrawn through an outlet 22, and a combustible product gas is discharged through an outlet 24.

The combustible product gas exits the gasifier 12 at high temperatures, in the range of 870°C to 1030°C. Mixed with the gas are other combustion product fragments, that are above their liquidus temperature. The mixture of product gas and product fragments or globules, also containing solid particulates such as char fines, is directed to a separator 26 through a conduit, herein referred to as a spool piece 28. The mixture is cleansed in the gas-solid separator 26, typically of the centrifugal or so-called cyclone type, such that a purer form of the combustible gas is discharged through an outlet 30 and more dense matter is discharged through an outlet 32. The more dense matter, including char fines, can be recycled to the gasifier through conduit 34, or can be discharged from the system through conduit 36.

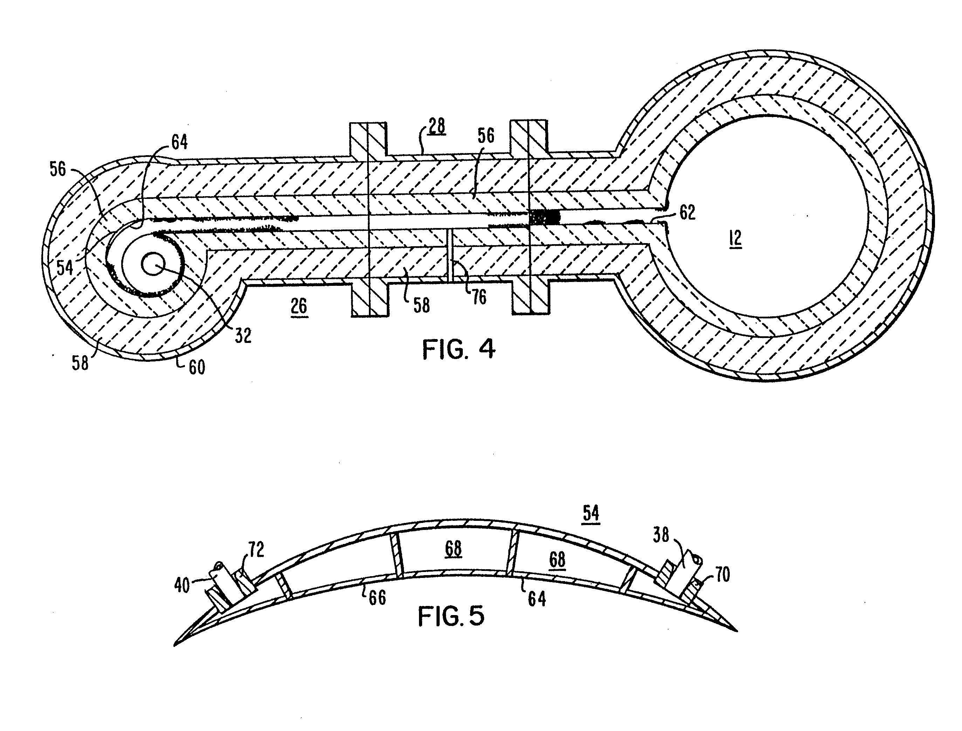

As described more fully with respect to Figures 4 through 8, a coolant flows to the separator 26 through one or more conduits 38, and is discharged through one or more outlets to a conduit 40. The coolant is heated at the separator 26, and can be passed through a heat exchanger 42 in thermal interexchange with another fluid, for example, circulating through a utilization circuit 44. Other means for utilizing the thermal energy contained in the coolant can also receive coolant discharged from the separator, for example, by utilizing the coolant as boiler feedwater.

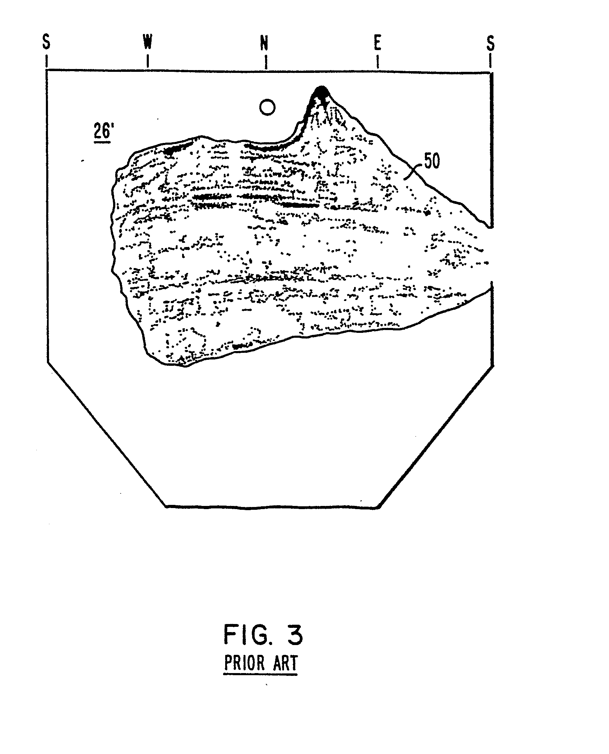

Referring now to Figures 2 and 3, there is shown a prior art cyclone separator 26' utilized at the Process Development Unit. The separator 26' includes a metal vessel 46 lined with a refractory material 48. During operation a buildup 50 of solid matter was deposited on the refractory surface, detracting from operating efficiency, and ultimately plugging the separator 26' at the inlet tube 52. Plugging occurred after approximately ninety hours of system operation with a feed coal of the Pittsburgh Seam type. A similar cyclone was subsequently placed in operation, having a smooth metallic interior liner at the cyclone inlet, which also experienced similar deposition upon the metallic surfaces.

Referring now to Figures 4 through 8, there are shown separators 26 constructed in accordance with the invention. With particular reference to Figures 4 and 5, the separator 26 is of the conventional type, but modified to include a cold wall segment 54. The separator accordingly includes a refractory interior 56 of Castolast G, commercially available from the Harbison-Walker Corporation, which is of the high alumina hard facing type. About the refractory 56 is a refractory insulation 58, of the Castable 26 type, also commercially available from the Harbison-Walker Corporation, which is contained within a stainless steel pressure vessel 60. Also shown in Figure 4 is the similarly constructed spoolpiece 28, typical of the prior art.

The cold wall segment 54, shown best in Figure 5, includes a metallic interior surface 64, preferably of a stainless steel, forming an interior wall 66. The segment includes means for cooling the surface 64, for example, chambers 68 through which a cooling medium is circulated. A coolant, preferably water in liquid state, is circulated through individual chambers 68 or manifolded to flow in parallel or series through a number of chambers 68 from an inlet 70 to an outlet 72. Plural inlets 70 and outlets 72 can also be utilized. The cold segment is maintained at a temperature less than 750°C, and preferably maintained at approximately 205°C. The temperature 750°C corresponds to the temperature at which $FeS_{1-x}$ compounds are liquidus.

The segment shown and tested extends 90° at the interior portion of the separator 26, directly in line with the incoming gas and product fragment matter mixture. Early tests with an uncooled metallic liner experienced severe deposition. In a test of the structure shown in Figure 4, the spoolpiece 28 and a rectangular outlet section 62 of the gasifier 12 were misaligned and, as shown, a plug built up at the misalignment junction after eight hours of operation. However, there was no deposition on the cold wall segment 54, which circulated water entering the segment 54 at approximately 4.5°C and being discharged from the segment at approximately 65°C. As shown, deposition did occur on other portions of the separator, adjacent the cold wall segment 54.

A second test experienced eventual plugging of the rectangular interior section of the spoolpiece 28 at a location of a pressure tap 76 after eighteen hours of operation. The cold wall segment 54 remained clean. Further tests, with a smooth inlet free of discontinuities are expected to provide long-term operation without plugging. It will be apparent that a smooth continuous surface, cooled to below the liquidus temperature of the contained matter within the gas mixture, will provide extended operation and alleviate detrimental adherence of impinging solid matter within the transporting components. The liquidus matter contained within the mixture impacts upon the cold wall segment and, due to the low temperature, solidifies and shrinks. This results in high stresses within the particle and at the region of contact between the solidified particle and the wall, which permit the particle to fall from the wall or be sheared from the wall by the gas flow or the flow of the non-sticky particles in the mixture.

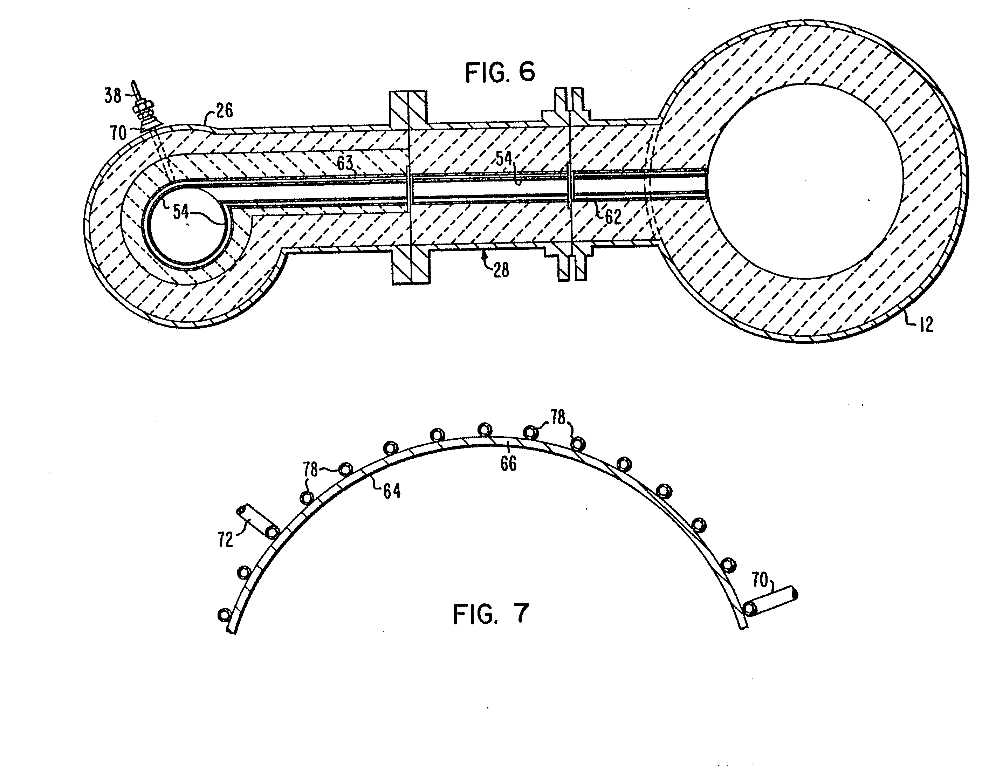

Accordingly, a cold wall of various shapes and locations can advantageously be utilized. Figure 6 shows a configuration where the cold wall segment 54 extends throughout the interior circumference of the separator 26, and including a rectangular inlet section 63. The cold wall 54 also extends through the spoolpiece 28 and the gasifier outlet 62. The cold wall surface is thus presented to all incoming matter in the gas mixture. It will also be apparent that the cold wall can be cooled in various manners. Figure 7 shows a configuration where the wall 66, comprised of quarter to half inch thick stainless steel plate, is cooled by flow of a coolant through stainless steel tubes 78 adjacent the wall 66.

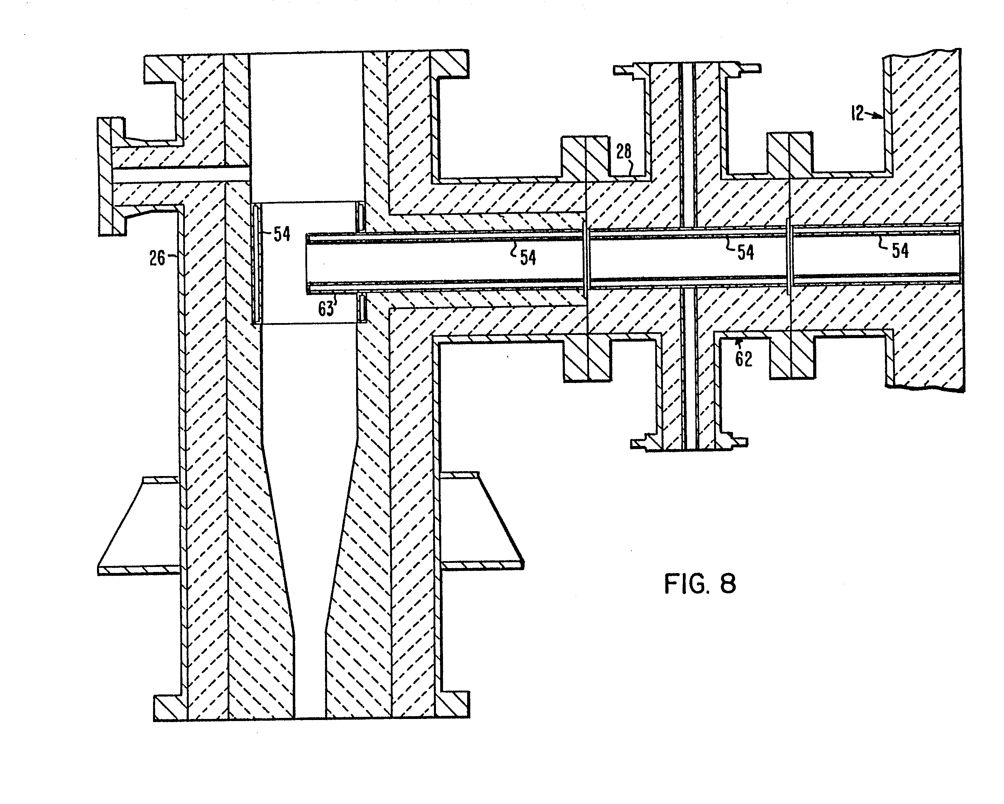

As shown in Figure 8, the cold wall segment 54 preferably extends vertically a height slightly larger than the inlet section 63 of the separator 26, or can extend fully above and below the inlet. It is important, however, that the cold wall be utilized on any interior surface subject to a substantial impingement by the gas and dense matter mixture. It is believed that inertial flight and impact deposition of particles in a separator not utilizing a cold wall arises in the following sequence. Matter carried with the gas enters the separator and impacts upon the wall opposite the inlet. The initial extent of spreading of the impact pattern on the wall appears to depend upon the size distribution of the matter and the inlet velocity. For smaller particles and lower mixture inlet velocities, the impact pattern extends further around the inner circumference of the separator in the direction of flow. More time is available for the contained matter to the respond to the flow turning and the particles are carried further around the separator before impacting the wall. For larger particles and higher inlet velocities, the impact pattern is more localized across from the inlet. Smaller particles and lower inlet velocities also tend to provide somewhat greater vertical dispersion and buildup patterns. Once initiated, in time the deposition builds toward the inlet from the opposite wall. As the deposit front nears the inlet, the inlet gas flow is further diffused and the impact pattern may be further spread. Ultimately, the deposit enters the inlet region and blocks the flow of the incoming mixture.

Thus, dependent upon the operational parameters of a specific application, such as mixture content, size of the incoming matter, and inlet velocity, the circumferential and vertical extension of a cold wall segment may be varied to suit the specific application.

The invention disclosed herein was made or conceived in the course of, or under, a contract with the United States Department of Energy identified as number EF-77-C-01-1514.

9

What we claim is:

1. An improved centrifugal separator adapted for cleansing a mixture of combustible gas and other matter discharged from a carbonaceous material gasifier (12) at a temperature above its liquidus temperature, characterized in that said separator's (26) internal surface area (54), which is positioned such that said mixture impacts thereon, is provided with cooling means (68) for maintaining said surface area (54) at a temperature below the liquidus temperature of said matter.

2. A separator according to claim 1, wherein said separator is cylindrical and vertically oriented and includes a tangential inlet, characterized in that said internal surface is disposed adjacent said inlet.

3. A separator according to claim 1, characterized in that said inlet and the complete internal surface of said separator are provided with cooling means.

4. A separator according to claim 1, 2 or 3, characterized in that said cooling means (68) includes conduits for circulating a liquid coolant in thermal heat exchange relation with said surface area (64), a utilization circuit (44), and a heat exchanger (42) for transmitting heat from said liquid coolant to said utilization circuit (44).

5. A process for cleansing in a centrifugal separator a mixture of combustible gas and matter discharged from a carbonaceous material gasifier at a temperature above its liquidus temperature, characterized in that said mixture is directed onto an interior surface area (64) of said centrifugal separator (32), which surface area is maintained at a temperature below the liquidus temperature of said matter.

6. A process according to claim 5, characterized in that the temperature of said surface area (64) is maintained at a temperature below approximately 204°C.

7. A process for gasifying a carbonaceous material containing sulphur wherein said material is devolatized and combusted to form a mixture of combustible product gas and matter at a temperature above 955°C, said mixture is directed to impinge upon an interior surface of a centrifugal separator, which surface is cooled by circulating a coolant in heat relation therewith so as to maintain said surface at a temperature below 752°C, and said coolant is circulated through means for utilizing the heat energy removed from said mixture at said interior surface.

FIG. I

FIG. 2
PRIOR ART

0074461

**FIG. 3**
PRIOR ART

FIG. 4

FIG. 5

0074461

FIG. 6

FIG. 7

FIG. 8

26

54

63

28

12

54 54 54

62

0074461

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | --- | | B 01 D 45/12 |
| A | CH-A- 575 246 (W.BAUMANN) *Figure 5; column 3, line 25 to 69* | 1-4 | C 10 J 3/84 |
| | | | C 10 K 1/02 |
| | | | B 04 C 3/02 |
| A | --- US-A-2 519 028 (A.Y.DODGE) | | |
| A | --- DE-A-2 802 132 (BERGWERKESVERBAND) | | |
| A | --- FR-A-2 360 655 (F.UHDE) | | |
| A | --- FR-A-2 349 642 (SHELL) | | |

-----

**TECHNICAL FIELDS SEARCHED (Int. Cl. 3)**

B 01 D 45/00
C 10 J 3/00
C 10 K 1/00
B 04 C 3/00

The present search report has been drawn up for all claims

| Place of search THE HAGUE | Date of completion of the search 16-12-1982 | Examiner BOGAERTS M.L.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82